# EUROPEAN PATENT APPLICATION

(11) **EP 3 812 640 A1**
(43) Date of publication of application: **28.04.2021**
(21) Application number: 20460039.9
(22) Date of filing: 12.10.2020
(51) Int. Cl.: F16L 59/14, F16L 9/12

(54) **PRE-INSULATED PIPE**

(30) Priority: 25.10.2019 PL 43160719
(71) Applicant: Zaklad Produkcy Jno-Uslugowy Miedzyrzecz Polskie Rury Preizolowane Sp. z o.o., 66-300 Miedzyrzecz (PL)
(72) Inventor: Górczynski, Dariusz, 66-300 Miedzyrzecz (PL); Górczynski, Henryk, 66-300 Miedzyrzecz (PL)
(74) Representative: Luczak, Jerzy

(57) **Abstract**

The subject of the invention is a pre-insulated pipe used for distribution of water at a temperature up to 165°C.

It is characterized in that the casing pipe forms the anti-diffusion layer, the effectiveness of which depends on the thickness of the external wall, whereas for pipes with an external diameter in the range of 75-180 mm, the wall thickness is increased by 60-70%, advantageously 66%, and for pipes with an external diameter in the range of 200-400 mm, the wall thickness is increased by 61-31%, and for pipes with an external diameter in the range of 450-630 mm, the wall thickness is increased by 29-15%.

## Description

The subject of the invention is a pre-insulated pipe used for distribution of water at a temperature up to 165°C.

The pipes for distribution of water at a temperature up to 165°C, in particular for distribution of high temperature water are a monolithic construction of a conduit pipe covered by polyurethane foam, applied by any manner, which in turn is covered by a casing pipe, usually made of polyethylene.

The parameters of the casing pipe - wall thickness in relation to the external diameter are normalised.

The conduit pipe is inserted to the casing pipe, and the space between them is filled with polyurethane foam by injection or by other methods. The pre-insulated pipe constructed in this manner should ensure a life of 30 years.

This effectiveness is however reduced by the diffusion of oxygen through the polyethylene casing pipe, which enters into chemical reactions with polyurethane foam, causing its degradation and lowering its insulation characteristics. The barrier properties are defined as the capacity to reduce oxygen diffusion. The limit values of oxygen diffusion in ml/m²/24 h are specified in the PN-EN ISO 2556:2002 and PN-EN ISO 4080:2010 standards. This is the amount of gas, in millilitres, which diffuses through 1 m² of the casing pipe over a time of 24 hours.

Extending the life of a pre-insulated pipe requires the use of a high barrier coefficient of the casing material. To increase barrier properties, an additional layer of aluminium was used in normalised pipes, which significantly reduces oxygen permeability. Introducing an additional layer of aluminium foil under the cover of the casing pipe is a complicated process which significantly increases the costs of manufacturing of pre-insulated pipes.

To eliminate the aforementioned problems a solution presented below was created. It turns out that the required barrier properties of the casing pipe may be obtained by adapting its wall thickness to its diameter.

The essence of the invention, which is a pre-insulated pipe forming a compact monolith, composed of a conduit pipe and a polyethylene casing pipe, the space between which is filled with thermal insulation in the form of a layer of polyurethane foam, consists of the casing pipe forming an anti-diffusion layer, the effectiveness of which depends on the thickness of the external wall, whereas for pipes with an external diameter in the range of 75-180 mm, the wall thickness is increased by 60-70%, advantageously 66%, and for pipes with an external diameter in the range of 200-400 mm, the wall thickness is increased by 61-31%, and for pipes with an external diameter in the range of 450-630 mm, the wall thickness is increased by 29-15%.

The use of the solution presented in the invention enables the following technical and utility effects:
- increasing the thickness of casing pipes decreases the velocity of oxygen diffusion through the wall - increasing its barrier properties;
- reduction in oxygen diffusion is highly efficient depending on the casing pipe thickness;
- increasing the effectiveness of pipe insulation through significant decrease of pipe wall diffusivity;
- stability of thermal conductivity λ before ageing and after ageing (30 years);
- reduction of operating costs (cheaper products, lower heat losses);
- more environmentally friendly products.

The subject of the invention, in an example, but not limiting, implementation was presented on examples below.

### Example I

Pre-insulated pipe, forming a compact monolith, composed of a conduit pipe and a polyethylene casing pipe, the space between which is filled with thermal insulation in the form of a layer of polyurethane foam, consists of the casing pipe forming the anti-diffusion layer. For pipes with an external diameter of 180 mm, the wall thickness is increased by 66%.

### Example II

Pre-insulated pipe, forming a compact monolith, composed of a conduit pipe and a polyethylene casing pipe, the space between which is filled with thermal insulation in the form of a layer of polyurethane foam, consists of the casing pipe forming the anti-diffusion layer. For pipes with an external diameter of 110 mm, the wall thickness is increased by 66%.

### Example III

Pre-insulated pipe, forming a compact monolith, composed of a conduit pipe and a polyethylene casing pipe, the space between which is filled with thermal insulation in the form of a layer of polyurethane foam, consists of the casing pipe forming the anti-diffusion layer. For pipes with an external diameter of 75 mm, the wall thickness is increased by 66%.

### Example IV

Pre-insulated pipe, forming a compact monolith, composed of a conduit pipe and a polyethylene casing pipe, the space between which is filled with thermal insulation in the form of a layer of polyurethane foam, consists of the casing pipe forming the anti-diffusion layer. For pipes with an external diameter of 200 mm, the wall thickness is increased by 62%.

### Example V

Pre-insulated pipe, forming a compact monolith, composed of a conduit pipe and a polyethylene casing pipe, the space between which is filled with thermal insulation in the form of a layer of polyurethane foam, consists of the casing pipe forming the anti-diffusion layer. For pipes with an external diameter of 400 mm, the wall thickness is increased by 31%.

### Example VI

Pre-insulated pipe, forming a compact monolith, composed of a conduit pipe and a polyethylene casing pipe, the space between which is filled with thermal insulation in the form of a layer of polyurethane foam, consists of the casing pipe forming the anti-diffusion layer. For pipes with an external diameter of 450 mm, the wall thickness is increased by 30 %.

### Example VII

Pre-insulated pipe, forming a compact monolith, composed of a conduit pipe and a polyethylene casing pipe, the space between which is filled with thermal insulation in the form of a layer of polyurethane foam, consists of the casing pipe forming the anti-diffusion layer. For pipes with an external diameter of 630 mm, the wall thickness is increased by 15%.

## Claims

1. pre-insulated pipe forming a compact monolith, composed of a conduit pipe and a polyethylene casing pipe, the space between which is filled with thermal insulation in the form of a layer of polyurethane foam, **characterized in that** the casing pipe forms an anti-diffusion layer, the effectiveness of which depends on the thickness of the external wall, whereas for pipes with an external diameter in the range of 75-180 mm, the wall thickness is increased by 60-70%, advantageously 66%, and for pipes with an external diameter in the range of 200-400 mm, the wall thickness is increased by 61-31%, and for pipes with an external diameter in the range of 450-630 mm, the wall thickness is increased by 29-15%.
